# EUROPEAN PATENT APPLICATION

(11) **EP 2 189 672 A2**
(43) Date of publication of application: **26.05.2010**
(21) Application number: 09176295.5
(22) Date of filing: 18.11.2009
(51) Int. Cl.: F16C 33/10

(54) **Bearing device and wind turbine having said bearing device**

(30) Priority: 21.11.2008 US 275966
(71) Applicant: General Electric Company, Schenectady, NY 12345 (US)
(72) Inventor: Benito Santiago, Pedro Luis, 48429 Rheine (DE); Yegro Segovia, Eugenio, 28979 Madrid (ES)
(74) Representative: Bedford, Grant Richard

(57) **Abstract**

A bearing device (200) for a main shaft (112) of a wind turbine (100) includes a fixed hollow-cylindrical portion (202) adapted for being mounted at a machine nacelle (103) of the wind turbine (100). An inner diameter of the hollow-cylindrical portion (202) is larger than the outer diameter of the main shaft (112) such that a cavity (204) is formed therebetween when the main shaft (112) is inserted into the hollow-cylindrical portion (202). Furthermore a fitting (203) provides a lubricating fluid to the cavity (204) between the fixed hollow-cylindrical portion (202) and the main shaft (112).

## Description

The present disclosure generally relates to wind turbines including a drive train having at least one rotor with at least one rotor blade attached to a hub, and especially relates to an apparatus for rotatably supporting a main shaft of a drive train of a wind turbine. Specifically, the present disclosure relates to the design and arrangement of bearings adapted for supporting the main shaft of the wind turbine.

Wind turbines are of increasing importance as an environmentally safe and relatively inexpensive energy source. Thus, an increased demand for an improved wind turbine performance has led to efforts concerning an energy-efficient bearing of a main shaft of a wind turbine. Bearing devices for such kind of main shafts may include complex lubrication systems. Typically, the main shaft of a wind turbine has a large diameter and rotates at a relatively low speed. Torque applied at the main shaft of a wind turbine can be relatively high in order to transfer wind energy from the rotor towards a speed adapter, e.g. a gearbox of the wind turbine.

In view of the above, a bearing device for a main shaft of a wind turbine is provided, said bearing device including a fixed hollow-cylindrical portion adapted for being mounted at a machine nacelle of the wind turbine, wherein an inner diameter of the hollow-cylindrical portion is larger than the outer diameter of the main shaft such that a cavity is formed therebetween when the main shaft is inserted into the hollow-cylindrical portion, and a fitting adapted to provide a lubricating fluid to the cavity between the fixed hollow-cylindrical portion and the main shaft.

According to another aspect a bearing device for a hub of a wind turbine is provided, said bearing device including a protruding portion adapted for being mounted at a main frame of a machine nacelle of the wind turbine, a rotatable hollow-cylindrical portion adapted for being connected to the hub, wherein an inner diameter of the rotatable hollow-cylindrical portion is larger than an outer diameter of the protruding portion such that a cavity is formed therebetween when the protruding portion is inserted into the rotatable hollow-cylindrical portion and a fitting adapted to provide a lubricating fluid to the cavity between the protruding portion and the rotatable hollow-cylindrical portion.

Further exemplary embodiments are described according to the dependent claims, the description and the accompanying drawings, in which:
Fig. 1 shows a schematic side view of a wind turbine wherein the main axis of the wind turbine is oriented towards the incoming wind direction at the location of the wind turbine;
Fig. 2 is a schematic top view of typical components within a machine nacelle of the wind turbine wherein the main axis is supported by two bearings;
Fig. 3 illustrates a journal bearing wherein the main axis of the wind turbine rotates within a cavity filled with a high-viscosity oil, according to a typical embodiment;
Fig. 4 is a side view of typical components attached to a main shaft of a wind turbine, wherein the main shaft is supported by a journal bearing and a gearbox of the wind turbine, according to a typical embodiment;
Fig. 5 is a side view of typical components attached to a main shaft of the wind turbine, wherein the wind turbine is supported by two journal bearings, according to another typical embodiment;
Fig. 6 is a cross-sectional view of a journal bearing operated by an electrorheological fluid, according to yet another typical embodiment; and
Fig. 7 is a cross-sectional view of typical components of a drive train of a wind turbine, wherein the main shaft is fixed and the hub rotates about the main shaft, wherein the hub is supported by journal bearings, according to yet another typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

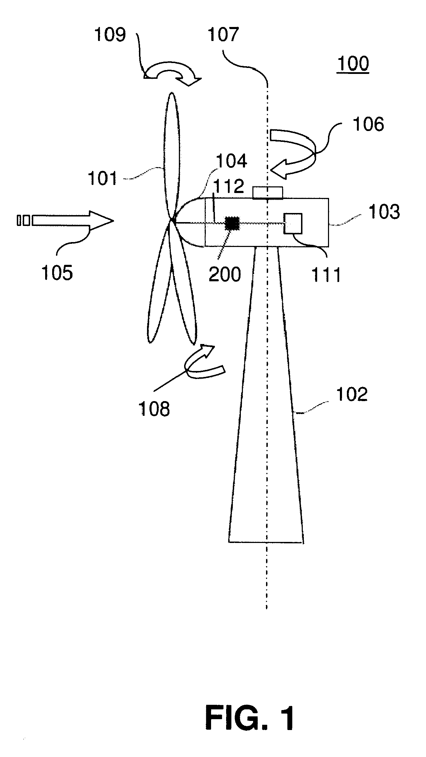

Fig. 1 is a schematic view of a wind turbine 100 having a machine nacelle 103, which is rotatably mounted on top of a tower 102. The wind turbine 100 further includes a rotor having a hub 104 and at least one rotor blade 101. The hub 104 is the central part of the rotor, and the at least one rotor blade 101 extends outwardly from the hub.

Although the wind turbine 100 illustrated in Fig. 1 includes three rotor blades 101, any number of rotor blades 101 may be provided. The nacelle 103 which is located on top of the tower 102 can be rotated about a central axis, e.g. a vertical axis 107 of the tower 102.

The orientation of the machine nacelle 103 with respect to the central axis of the tower 102 is referred to as a yaw angle 106. The yaw angle 106 is adjusted such that an axis of the main shaft 112 of the drive train of the wind turbine is typically directed towards an incoming wind direction 105.

Moreover, the at least one rotor blade 101 may be adjusted with respect to its longitudinal axis such that a pitch angle 108 of the rotor blade may be adapted to the incoming wind velocity. A bending moment 109 may occur due to a vertical wind shear such that the main shaft 112 of the wind turbine experiences a bending force. The main shaft 112 of the wind turbine mechanically connects the hub 104 to a gearbox 111 such that a rotational momentum provided by the wind energy may be transferred to the gearbox 111 and further on to an electrical generator (not shown in Fig. 1) for the generation of electric energy.

It is noted here, albeit not shown in Fig. 1, that instead of using a gearbox 111 in order to transform rotational energy at low rotational speeds into rotational energy at high rotational speeds, a magnetic speed adaptor may be used which does not require any mechanical gearboxes.

In Fig. 1, reference numeral 111 denotes a mechanical gearbox which is not detailed in the following description, because the gearbox itself does not contribute to the understanding of the present disclosure. A bearing device 200 is provided for rotatably supporting the main shaft 112 of the wind turbine 100.

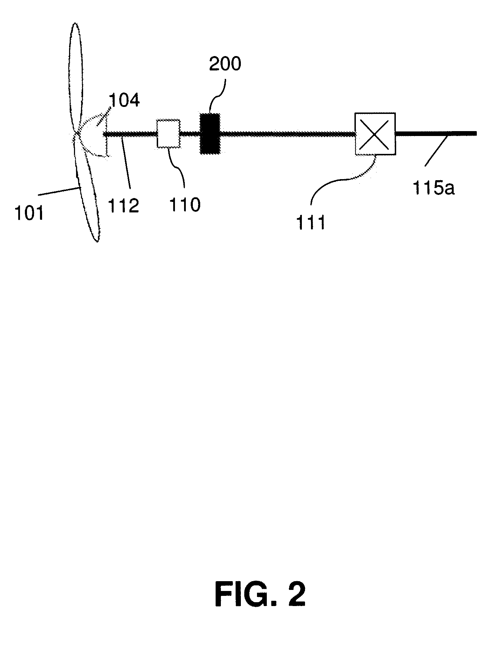

Fig. 2 is a schematic top view of the wind turbine 100 indicating typical components of the drive train of the wind turbine. The at least one rotor blade 101 is attached at the hub 104, wherein the rotation of the hub 104 results in a rotation of the main shaft 112. A rotation sensor 110 is provided in order to determine a rotational speed of the main shaft 112. The main shaft 112 is supported by the bearing device 200 which will be described in detail hereinafter. The main shaft 112 furthermore is connected to the gearbox 111 which transforms a low rotational input speed into a high rotational output speed provided at a gearbox output shaft 115a.

Typically, a drive train of a wind turbine 100 includes the rotor having at least one rotor blade 101 and the hub 104 and the main shaft 112. The main shaft 112 is supported by at least one bearing device 200.

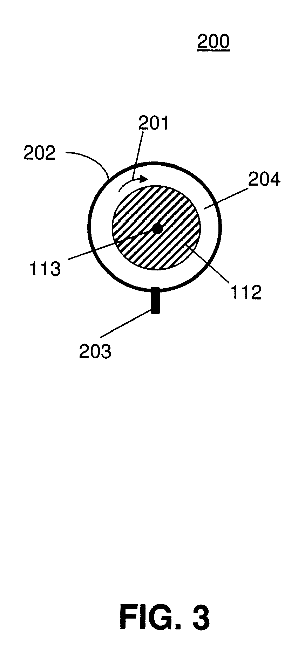

A bearing device 200 according to a typical embodiment is illustrated in Fig. 3.

Fig. 3 is a cross-section of a main shaft 112 of a wind turbine 100 at the location of a bearing device 200. The bearing device 200 according to the typical embodiment shown in Fig. 3 includes a fixed hollow-cylindrical portion 202 used as a housing which has a fitting 203.

The fitting 203 is adapted for inserting a high-viscosity fluid into the interior of the housing 202. Within the housing, the main shaft 112 is supported rotatably. A reference numeral 113 denotes a rotation axis of the main shaft 112. The housing 203 may be formed as a hollow-cylindrical portion having end covers in order to prevent the fluid leakage.

A high-viscosity fluid is distributed within a cavity 204 between the main shaft 112 and an inner wall of the housing 202. According to the typical set-up of a journal bearing device 200 shown in Fig. 3, a frictionless environment is provided in order to support and guide the rotating main shaft 112. Typical journal bearings 200 exhibit a long lifetime as compared to conventional roller bearings.

The housing 202 is provided as a cylinder surrounding the main shaft 112 wherein the cavity 204 between the outer surface of the main shaft 112 and the inner surface of the housing 202 is filled with a fluid lubricant, e.g. a high-viscosity oil. In the bearing arrangement shown in Fig. 3, the main shaft 112 is supported by the fluid lubricant when the main shaft 112 is rotating. Hydrodynamic principles which are active as the main shaft 112 rotates support the main shaft 112 and relocate it within the cavity 204.

Typically, high-viscosity lubricants are filled into the cavity 204 for providing a bearing for slowly rotating main shafts 112 of wind turbines 100. Reference numeral 201 in Fig. 3 indicates a rotation direction.

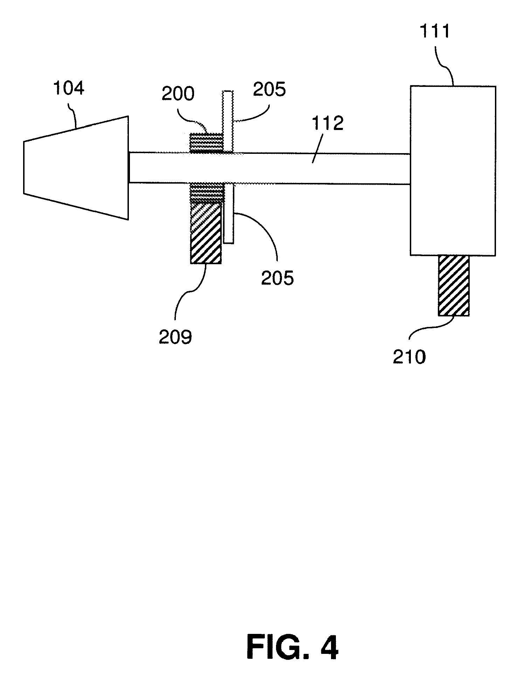

Fig. 4 is a side view of a drive train of a wind turbine 100, wherein the drive train typically includes the hub 104 and the main shaft 112 which is connected to the hub 104. In the typical embodiment illustrated in Fig. 4, the main shaft 112 furthermore is connected to the gearbox 111 which can be provided as a speed adapter. The gear box 111 is supported by a second mounting unit 210 such that one end of the main shaft 112 is supported.
The other end of the main shaft 112 is supported by a bearing device 200 which is provided as a journal bearing according to a typical embodiment. The bearing device 200 is supported by a first mounting unit 209. Both the first mounting unit 209 and the second mounting unit 210 are fixed at a main frame (not shown in Fig. 4) of the machine nacelle 103 of the wind turbine 100.

According to a typical embodiment, the first mounting unit 209 and the second mounting unit 210 may be provided as elastic supports for the journal bearings in order to absorb extreme loads and/or bending moments explained above.

Furthermore, a thrust bearing 205 is provided in order to define an axial position of the main shaft 112. The thrust bearing 205 may be provided as a conventional roller bearing and/or as a journal bearing.

It is noted here that, albeit a single journal bearing device 200 is shown in Fig. 4, two or more journal bearing devices 200 may be provided in order to rotatably support the main shaft 112 of the drive train of the wind turbine 100. In the typical embodiment shown in Fig. 4, the main shaft 112 is supported, on the left side in Fig. 4, by the bearing device 200 and on the right side of Fig. 4, by the gearbox 111.

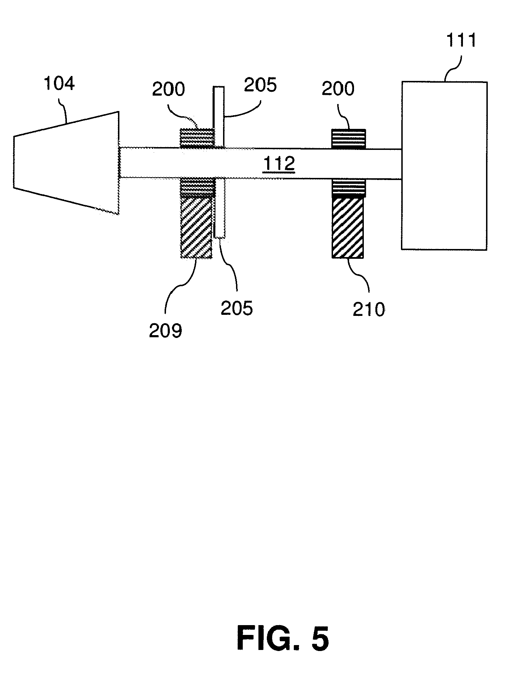

Fig. 5 is a side view of a drive train arrangement according to another typical embodiment. The drive train includes a hub 104 in the main shaft 112, wherein the main shaft 112 is a connection means between the hub 104 and the gearbox 111. In the typical embodiment illustrated in Fig. 5, two journal bearing devices 200 are provided in order to rotatably support the main shaft 112 of the wind turbine 100.

The two bearing devices 200 are supported by a first mounting unit 209 and a second mounting unit 210. It is noted here that the first and second mounting units 209, 210 may be provided as elastic supports in order to absorb extreme loads and/or bending moments from the main shaft 112. In the typical embodiment shown in Fig. 5, the gearbox 111 is attached to one side of the main shaft 112. Furthermore, thrust bearings 205 which can be provided as journal bearings are used in order to axially define the position of the main shaft 112.

Materials used for the at least one journal bearing device 200, in particular for the housing 202 of the at least one journal bearing device 200 include, but are not restricted to, white metal, babbit metal, composite material, high performance plastic material and phosphor bronze. According to a further typical embodiment, metal with tailor-made coatings can be applied such as hard-coated nickel-chrome-boron.

Furthermore, high-performance plastic material can be used between a metallic part and a plastic portion. Typically, the high-viscosity oil which is used in the journal bearings 200 according to the typical embodiments has viscosities over 1,000 cSt (centi-Stokes; 1 cSt = 10⁻⁶ m² s⁻¹) at 40° C. Moreover, according to a typical embodiment, polyalphaolefin having a viscosity of approximately 43,000 cSt that will allow to have the required oil film may be used.

The outer surface of the main shaft 112 at the location of the journal bearing 200 can be polished. Furthermore, the inner surface of the housing 202 of the journal bearing can have a polished structure. The fluid lubricant such as the high-viscosity oil is fed into the cavity 204 of the bearing 200 via the fitting 203 (see Fig. 3). The filling of the journal bearing 200 with the fluid lubricant may be performed under high pressure.

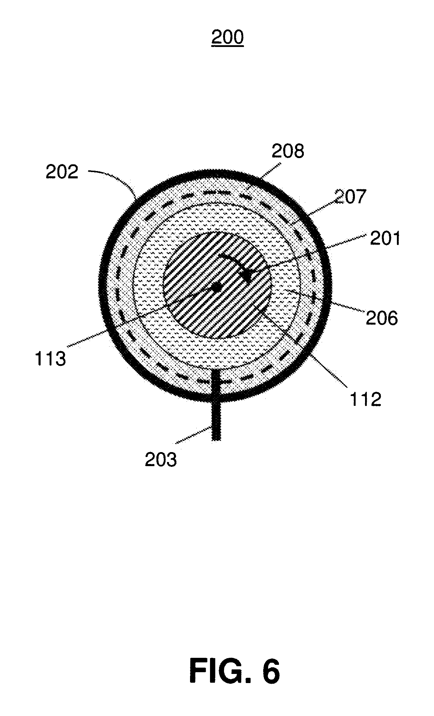

Fig. 6 is a cross-sectional view of a journal bearing 200 according to yet another typical embodiment. The journal bearing 200 shown in Fig. 6 has a housing 202 and a high-performance plastic material 208 which is attached at the inner wall of the hollow-cylindrical housing 202. Within the high-performance plastic material 208, a cylindrical electrode 207 is embedded. Reference numeral 201 in Fig. 3 indicates a rotation direction of the main shaft 112 about the rotation axis 113.

The cavity 204 between the main shaft 112 and the housing 202 (denoted by a reference numeral 204 in Fig. 3) is filled by an electrorheological fluid 206. The electrorheological fluid 206 is a fluid the viscosity of which can be controlled by means of an electric field applied across the fluid layer.

The electrorheological fluid 206 is introduced into the cavity 204 by means of a fitting 203. In a typical embodiment, the electrorheological fluid 206 is introduced under high pressure.

According to a typical embodiment, a power supply (not shown) is used in order to apply a potential difference between the electrode 207 and the electrically conducting main shaft 112. The larger the electric field applied between the electrode 207 and the main shaft 112, the larger is the viscosity of the fluid lubricant, i.e. the electrorheological fluid 206. The viscosity of the electrorheological fluid 206 may be adjusted in accordance with an environmental temperature such that a constant viscosity can be provided for the journal bearing 200 even if environmental temperatures change due to, e.g. summer/winter season.

Furthermore, it is possible to introduce a magnetorheological fluid into the cavity 204 between the main shaft 112 and the housing 202.

The magnetorheological fluid is controllable by means of a magnetic field. Thus, a magnetically transmitting material has to be provided for the housing 202 of the bearing device 200 in addition to a magnetic field generation means (not shown in the drawings), instead of the electrode configuration 207, 112. The magnetic field created in a direct drive can be used for that purpose and the control of the magnetic and/or electric field can be embedded in the control of the generator/converter.

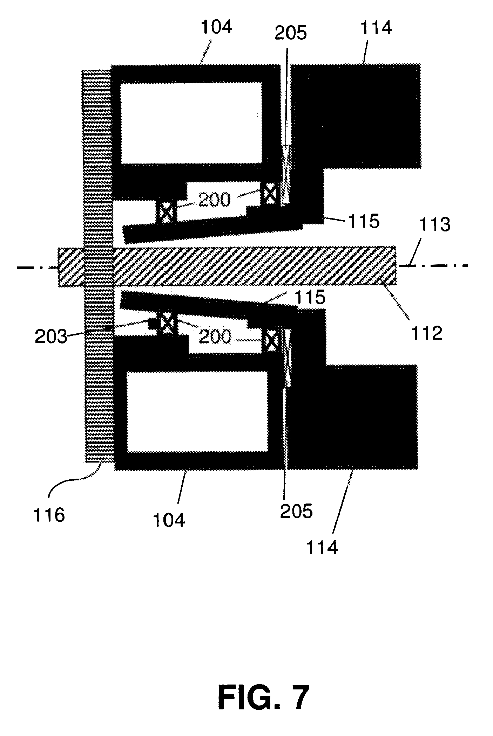

Fig. 7 is a side sectional view of a drive train of the wind turbine according to yet another typical embodiment. In the arrangement shown in Fig. 7, a main frame 114 is fixed, whereas the hub 104 together with the at least one rotor blade 101 (not shown in Fig. 7) is rotating about a fixed protruding portion 115 of the fixed main frame 114.
The rotation axis 113 coincides with the central axis of the main shaft 112. The protruding portion 115 may be hollow such that the main shaft 112 can be inserted into the protruding portion. Thus the main shaft 112 is adapted for rotating within the fixed protruding portion 115 of the fixed main frame 114. The support of the hub 104 is provided by journal bearing devices 200 at two axial positions along the fixed protruding portion 115 of the fixed main frame 114. The bearing devices may include a fitting 203 adapted to provide a lubricating fluid. Furthermore, thrust bearings 205 are provided in order to define an axial position of the rotating hub 104. A mechanical connection of the hub 104 to the main shaft 112 is provided by an axis support unit 116.

It is noted here, albeit not shown in Fig. 7 that the main axis 112 can be supported by at least one journal bearing device 200 according to a typical embodiment (see e.g. Fig. 3.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

Various aspects and embodiments of the present invention are defined by the following numbered clauses:
1. A bearing device for a main shaft of a wind turbine comprising:
   a fixed hollow-cylindrical portion adapted for being mounted at a machine nacelle of the wind turbine,
   wherein an inner diameter of the hollow-cylindrical portion is larger than the outer diameter of the main shaft such that a cavity is formed therebetween when the main shaft is inserted into the hollow-cylindrical portion; and
   a fitting adapted to provide a lubricating fluid to the cavity between the fixed hollow-cylindrical portion and the main shaft.
2. The bearing device in accordance with clause 1, wherein the lubricating fluid is provided as a high-viscosity oil and/or grease.
3. The bearing device in accordance with any preceding clause, wherein the fixed hollow-cylindrical portion further comprises an electrode, wherein the lubricating fluid is provided as an electrorheological fluid adapted to be viscosity-controlled by means of an electric field applied between the electrode and the main shaft.
4. The bearing device in accordance with any preceding clause, wherein the fixed hollow-cylindrical portion further comprises a magnetic field generation means adapted for generating a magnetic field within the cavity, wherein the lubricating fluid is provided as a magnetorheological fluid adapted to be viscosity-controlled by means of the magnetic field generated by the magnetic field generation means.
5. The bearing device in accordance with any preceding clause, wherein the fixed hollow-cylindrical portion has a polished inner surface.
6. The bearing device in accordance with any preceding clause, wherein the fixed hollow-cylindrical portion is made from at least one material of the group of white metal, babbit metal, composite material, high performance plastic material and phosphor bronze.
7. A bearing device for a hub of a wind turbine comprising:
   a protruding portion adapted for being mounted at a main frame of a machine nacelle of the wind turbine;
   a rotatable hollow-cylindrical portion adapted for being connected to the hub, wherein an inner diameter of the rotatable hollow-cylindrical portion is larger than an outer diameter of the protruding portion such that a cavity is formed therebetween when the protruding portion is inserted into the rotatable hollow-cylindrical portion; and
   a fitting adapted to provide a lubricating fluid to the cavity between the protruding portion and the rotatable hollow-cylindrical portion.
8. The bearing device in accordance with any preceding clause, wherein the lubricating fluid is provided as a high-viscosity oil and/or grease.
9. The bearing device in accordance with any preceding clause, wherein the rotatable hollow-cylindrical further comprises an electrode, wherein the lubricating fluid is provided as an electrorheological fluid adapted to be viscosity-controlled by means of an electric field applied between the electrode and fixed hollow-cylindrical portion.
10. The bearing device in accordance with any preceding clause, wherein the protruding portion further comprises a magnetic field generation means adapted for generating a magnetic field within the cavity, wherein the lubricating fluid is provided as a magnetorheological fluid adapted to be viscosity-controlled by means of the magnetic field generated by the magnetic field generation means.
11. The bearing device in accordance with any preceding clause, wherein the protruding portion is made from at least one material of the group of white metal, babbit metal, composite material, high performance plastic material and phosphor bronze.
12. A wind turbine comprising a main shaft and a bearing device, said bearing device comprising:
   a fixed hollow-cylindrical portion adapted for being mounted at a machine nacelle of the wind turbine,
   wherein an inner diameter of the hollow-cylindrical portion is larger than the outer diameter of the main shaft such that a cavity is formed therebetween when the main shaft is inserted into the hollow-cylindrical portion; and
   a fitting adapted to provide a lubricating fluid to the cavity between the fixed hollow-cylindrical portion and the main shaft.
13. The wind turbine in accordance with clause 12, wherein the main shaft at the location of the bearing device has a polished outer surface.
14. The wind turbine in accordance with clause 12 or 13, wherein the fixed hollow-cylindrical portion has a polished inner surface.
15. The wind turbine in accordance with any of clauses 12 to 14, wherein the lubricating fluid is provided as a high-viscosity oil and/or grease.
16. The wind turbine in accordance with any of clauses 12 to 15, wherein the fixed hollow-cylindrical portion further comprises an electrode, wherein the lubricating fluid is provided as an electrorheological fluid adapted to be viscosity-controlled by means of an electric field applied between the electrode and the main shaft.
17. The wind turbine in accordance with any of clauses 12 to 16, wherein the fixed hollow-cylindrical portion further comprises a magnetic field generation means adapted for generating a magnetic field within the cavity, wherein the lubricating fluid is provided as a magnetorheological fluid adapted to be viscosity-controlled by means of the magnetic field generated by the magnetic field generation means.
18. A wind turbine comprising a hub and a bearing device, said bearing device comprising:
   a protruding portion adapted for being mounted at a main frame of a machine nacelle of the wind turbine;
   a rotatable hollow-cylindrical portion adapted for being connected to the hub, wherein an inner diameter of the rotatable hollow-cylindrical portion is larger than an outer diameter of the protruding portion such that a cavity is formed therebetween when the protruding portion is inserted into the rotatable hollow-cylindrical portion; and
   a fitting adapted to provide a lubricating fluid to the cavity between the protruding portion and the rotatable hollow-cylindrical portion.
19. The wind turbine in accordance with any of clauses 12 to 18, wherein the protruding portion is hollow such that a main shaft of the wind turbine can rotate within the protruding portion.
20. The wind turbine in accordance with any of clauses 12 to 19, wherein the rotatable hollow-cylindrical portion further comprises an electrode, wherein the lubricating fluid is provided as an electrorheological fluid adapted to be viscosity-controlled by means of an electric field applied between the electrode and the main shaft.
21. The wind turbine in accordance with any of clauses 12 to 20, wherein the protruding portion further comprises a magnetic field generation means adapted for generating a magnetic field within the cavity, wherein the lubricating fluid is provided as a magnetorheological fluid adapted to be viscosity-controlled by means of the magnetic field generated by the magnetic field generation means.

## Claims

1. A bearing device (200) for a main shaft (112) of a wind turbine comprising:
a fixed hollow-cylindrical portion (202) adapted for being mounted at a machine nacelle (103) of the wind turbine (100),
wherein an inner diameter of the hollow-cylindrical portion (202) is larger than the outer diameter of the main shaft (112) such that a cavity (204) is formed therebetween when the main shaft (112) is inserted into the hollow-cylindrical portion (202); and
a fitting (203) adapted to provide a lubricating fluid to the cavity (204) between the fixed hollow-cylindrical portion (202) and the main shaft (112).

2. The bearing device (200) in accordance with claim 1, wherein the lubricating fluid is provided as a high-viscosity oil and/or grease.

3. The bearing device (200) in accordance with any preceding claim, wherein the fixed hollow-cylindrical portion (202) further comprises an electrode (207), wherein the lubricating fluid is provided as an electrorheological fluid (206) adapted to be viscosity-controlled by means of an electric field applied between the electrode and the main shaft (112).

4. The bearing device (200) in accordance with any preceding claim, wherein the fixed hollow-cylindrical portion (202) further comprises a magnetic field generation means adapted for generating a magnetic field within the cavity (204), wherein the lubricating fluid is provided as a magnetorheological fluid adapted to be viscosity-controlled by means of the magnetic field generated by the magnetic field generation means.

5. The bearing device (200) in accordance with any preceding claim, wherein the fixed hollow-cylindrical portion (202) is made from at least one material of the group of white metal, babbit metal, composite material, high performance plastic material and phosphor bronze.

6. The bearing device (200) in accordance with any preceding claim, wherein the main shaft (112) at the location of the bearing device (200) has a polished outer surface.

7. The bearing device (200) in accordance with any preceding claim, wherein the fixed hollow-cylindrical portion (202) has a polished inner surface.

8. A bearing device (200) for a hub (104) of a wind turbine (100) comprising:
a protruding portion (115) adapted for being mounted at a main frame of a machine nacelle (103) of the wind turbine (100);
a rotatable hollow-cylindrical portion (202) adapted for being connected to the hub (104), wherein an inner diameter of the rotatable hollow-cylindrical portion (202) is larger than an outer diameter of the protruding portion (115) such that a cavity (204) is formed therebetween when the protruding portion (115) is inserted into the rotatable hollow-cylindrical portion (202); and
a fitting (203) adapted to provide a lubricating fluid to the cavity (204) between the protruding portion (115) and the rotatable hollow-cylindrical portion (202).

9. The bearing device (200) in accordance with claim 8, wherein the lubricating fluid is provided as a high-viscosity oil and/or grease.

10. The bearing device (200) in accordance with claim 8 or claim 9, wherein the rotatable hollow-cylindrical further comprises an electrode, wherein the lubricating fluid is provided as an electrorheological fluid (206) adapted to be viscosity-controlled by means of an electric field applied between the electrode and fixed hollow-cylindrical portion (202).

11. The bearing device (200) in accordance with any of claims 8 to 10, wherein the protruding portion (115) further comprises a magnetic field generation means adapted for generating a magnetic field within the cavity (204), wherein the lubricating fluid is provided as a magnetorheological fluid adapted to be viscosity-controlled by means of the magnetic field generated by the magnetic field generation means.

12. The bearing device (200) in accordance with any of claims 8 to 11, wherein the protruding portion (115) is made from at least one material of the group of white metal, babbit metal, composite material, high performance plastic material and phosphor bronze.

13. The bearing device (200) in accordance with any of claims 8 to 12, wherein the protruding portion (115) is hollow such that a main shaft (112) of the wind turbine (100) can rotate within the protruding portion (115).

14. The bearing device (200) in accordance with any of claims 8 to 13, wherein the protruding portion (115) at the location of the bearing device (200) has a polished outer surface.

15. The bearing device (200) in accordance with any of claims 8 to 14, wherein the rotatable hollow-cylindrical (202) has a polished inner surface.
